# FASCICULE DE BREVET EUROPEEN

(11) **EP 1 456 573 B1**
(45) Date de publication et mention de la délivrance du brevet: **17.08.2005**
(21) Numéro de dépôt: 02799104.1
(22) Date de dépôt: 19.12.2002
(51) Int. Cl.: F16L 21/00, F16L 21/06

(54) **DISPOSITIF D ACCOUPLEMENT ETANCHE DE DEUX TUBES RIGIDES DE MEME DIAMETRE EXTERIEUR**
DICHTE KUPPLUNGSVORRICHTUNG FUER ZWEI STARRE ROHRE MIT GLEICHEN AUSSENDURCHMESSERN
DEVICE FOR SEALED COUPLING OF TWO RIGID TUBES OF SAME EXTERNAL DIAMETER

(30) Priorité: 21.12.2001 FR 0116664
(43) Date de publication de la demande: 15.09.2004
(73) Titulaire: LIMA, 11100 Narbonne (FR)
(72) Inventeur: CALMETTES, Lionel, F-23220 Bonnat (FR)
(74) Mandataire: Laget, Jean-Loup
(86) Numéro de dépôt international: PCT/FR2002/004450
(87) Numéro de publication internationale: WO 2003/054431

(56) Documents cités:
- DE-A- 19 901 663
- FR-A- 1 537 581
- GB-A- 570 913
- US-A- 3 724 878

## Description

La présente invention concerne un dispositif d'accouplement étanche de deux tubes rigides de même diamètre extérieur.

Pour assurer un tel accouplement, il est connu d'utiliser un manchon fendu ou en deux parties semi- circulaires, entourant les extrémités des deux tubes, et de le serrer au moyen d'au moins une vis.

Le document US 3 479 066 prévoit entre les deux tubes et le manchon une garniture d'étanchéité en matériau souple, par exemple en néoprène, présentant une nervure en saillie vers l'intérieur, cette nervure étant pincée entre les extrémités des deux tubes.

Le document DE 3 843 738 prévoit un manchon cylindrique fendu, deux brides étant soudées sur la surface extérieure du manchon, de chaque côté de la fente de celui-ci, pour pouvoir serrer le manchon au moyen de deux ensembles boulon-écrou. L'une des deux brides recouvre la fente du manchon et l'étanchéité est assurée par une bande de métal mince qui est pincée entre les deux bords de la fente du manchon, lors du serrage.

Le document EP 0 458 700 décrit un manchon fendu avec deux extrémités tronconiques, un organe d'étanchéité étant prévu sous la forme d'une bande métallique enroulée sur elle-même. Cette bande d'étanchéité a ses extrémités découpées en biseau et chacun de ses bords longitudinaux présente un jonc d'étanchéité faisant saillie vers l'intérieur de la bande après son enroulement sur elle- même.

Les dispositifs d'accouplement selon ces documents antérieurs présentent certains inconvénients.

Dans le document US 3 479 066, la présence d'une garniture d'étanchéité en matériau souple conduit en général à prévoir son remplacement lorsque les conditions environnementales sont contraignantes, comme par exemple dans les tuyaux d'échappement des véhicules automobiles.

Dans les documents DE 3 843 738 et EP 0 458 700, la réalisation des brides d'assemblage et de serrage du manchon est onéreuse car il est nécessaire de prévoir des goussets ou des nervures de raidissement.

Enfin, l'étanchéité par bande métallique, même munie de joncs, n'est pas assurée de façon certaine à cause de la fente qui subsiste après serrage, entre les extrémités découpées en biseau de ladite bande.

L'un des buts de l'invention est donc de proposer un dispositif d'accouplement de deux tubes rigides de même diamètre extérieur, ne présentant pas ces inconvénients, c'est-à- dire simple à réaliser et à mettre en oeuvre et assurant une bonne étanchéité de l'accouplement.

A cet effet, l'invention a pour objet un dispositif pour l'accouplement étanche de deux tubes rigides lisses de même diamètre disposés selon le même axe en regard l'un de l'autre, comportant une garniture d'étanchéité entourant une partie d'extrémité de chacun de deux tubes placés en regard, un manchon fendu longitudinalement entourant la garniture d'étanchéité, et des moyens de serrage pour serrer radialement ledit manchon autour de la garniture d'étanchéité et presser radialement ladite garniture d'étanchéité contre la périphérie des parties d'extrémité des deux tubes, caractérisé en ce que la garniture d'étanchéité est constituée par une pièce métallique de révolution à paroi mince, ayant la forme générale d'un cylindre avec deux collets rabattus vers l'extérieur à ses extrémités, et en ce que le manchon fendu est conformé de manière que sa surface périphérique intérieure présente deux gorges qui sont aptes à recevoir respectivement les deux collets de ladite pièce de révolution et qui ont une profondeur plus faible que la dimension radiale desdits collets, de telle sorte que le fond des gorges soit apte à agir sur la périphérie des collets, respectivement, sur toute leur circonférence, pour provoquer un rétreint des zones d'extrémité de ladite pièce de révolution et amener lesdites zones d'extrémité en contact étanche avec la surface périphérique extérieure des parties d'extrémité des deux tubes, sur toute leur circonférence, lors du serrage du manchon fendu par les moyens de serrage autour de ladite pièce de révolution.

Le dispositif d'accouplement selon l'invention peut en outre présenter une ou plusieurs des caractéristiques suivantes :
- lesdits collets ont une dimension radiale sensiblement égale à cinq fois l'épaisseur de la paroi de ladite pièce de révolution, et lesdites gorges ont une profondeur sensiblement égale au 3/5 de 1 a dimension radiale des collets et une largeur sensiblement égale à trois fois l'épaisseur de la paroi de ladite pièce de révolution ;
- ladite pièce de révolution est en acier doux revêtu d'aluminium ou en axier inoxydable ;
- ladite pièce de révolution a une épaisseur de paroi d'environ 0,5mm, les collets ont une dimension radiale d'environ 2,5mm et les gorges ont une profondeur d'environ 1,5mm ;
- le manchon fendu est conformé de manière que sa surface périphérique intérieure présente, entre les deux gorges, une gorge supplémentaire, de plus grande largeur que les deux gorges, avec formation d'un renflement intérieur entre chacune des deux gorges et la gorge supplémentaire, ledit renflement intérieur ayant une surface périphérique intérieure qui est décalée radialement vers l'extérieur par rapport à la surface périphérique intérieure du manchon dans ses régions situées au-delà des deux gorges vers les extrémités dudit manchon ;
- les gorges du manchon fendu sont formées par une opération de roulage ou laminage d'une bande en acier doux revêtu d'aluminium ou en axier inoxydable;
- les moyens de serrage comprennent deux anneaux ouverts à ressort, qui entourent le manchon fendu dans des régions de celui-ci situées respectivement à proximité des deux gorges, et deux cames qui sont associées respectivement aux deux anneaux à ressort et qui sont aptes à agir sur des extrémités en forme de crochet des deux anneaux à ressort pour resserrer lesdits anneaux à ressort autour dudit manchon fendu et comprimer radialement celui- ci ;
- chaque anneau à ressort a un profil ondulé par rapport à un plan moyen dudit anneau à ressort ;
- chaque came comporte une lumière dans laquelle sont engagées les extrémités en forme de crochet de l'anneau à ressort associé à la came, ladite lumière ayant une partie large se raccordant par une partie de largeur décroissante à une partie étroite, de telle manière qu'un déplacement relatif de la came par rapport aux extrémités en forme de crochet de l'anneau à ressort associé depuis la partie la rge jusqu'à la partie étroite de la lumière provoque un resserrement dudit anneau à ressort ;
- chaque came a une forme générale en L, dont une première branche s'étend parallèlement à l'axe longitudinal du manchon fendu et une seconde branche s'étend perpendiculairement audit axe longitudinal, ladite lumière étant formée dans la première branche, et les moyens de serrage comprennent en outre un dispositif de serrage à vis apte à coopérer avec les secondes branches des deux cames pour provoquer simultanément ledit déplacement relatif des deux cames ;
- les premières branches des deux cames s'étendent dans des directions opposées, la partie étroite de la lumière de chaque came se trouve près de l'extrémité libre de la première branche de la came correspondante, et le dispositif de serrage à vis est constitué par une vis dont la tête prend appui sur la seconde branche d'une première des deux cames et dont la tige filetée passe librement à travers un trou lisse dans la seconde branche de la première came et est vissée dans un trou taraudé dans la seconde branche de la seconde came ;
- le manchon fendu comporte des moyens de positionnement pour définir la position axiale des anneaux à ressort dans lesdites régions du manchon fendu situées à proximité des deux gorges ;
- lesdits moyens de positionnement sont formés par déformation localisée, vers l'extérieur, de la paroi du manchon fendu lors de ladite opération de roulage ou laminage de ladite bande d'acier doux ;
- deux encoches sont formées respectivement dans les extrémités du manchon fendu et sont aptes à recevoir des protubérances qui font saillie respectivement sur la périphérie des parties d'extrémité des deux tubes à accoupler, de façon à définir à la fois des moyens de positionnement angulaire et des moyens de positionnement axial du manchon fendu par rapport aux deux tubes, tels que, en service, les extrémités mutuellement en vis à vis des deux tubes se trouvent dans la région médiane du manchon fendu entre les deux gorges de celui-ci ;
- dans sa région médiane, ladite pièce de révolution comporte au moins une protubérance qui fait radialement saillie vers l'intérieur sur la surface périphérique intérieure de la pièce de révolution et qui définit une butée axiale pour les deux tubes à accoupler.

Ces caractéristiques, ainsi que d'autres caractéristiques et avantages du dispositif d'accouplement selon l'invention apparaîtront mieux au cours de la description suivante donnée à titre d'exemple en référence aux dessins annexés sur lesquels :
- la figure 1 est une vue en perspective d'un dispositif d'accouplement selon l'invention ;
- la figure 2 est une vue en coupe longitudinale du dispositif d'accouplement ;
- la figure 3 est une vue de face d'un des deux anneaux à ressort utilisé dans le dispositif d'accouplement des figures 1 et 2 ;
- la figure 4 est une vue de côté de l'anneau de la figure 3 ;
- la figure 5 montre, à plus grande échelle, la forme de la lumière réalisée dans chacune des deux cames utilisées dans le dispositif d'accouplement selon l'invention ;
- la figure 6 montre une autre forme possible pour la lumière des cames ;
- la figure 7 est une vue partielle en coupe suivant la ligne A-A de la figure 5 ou 6 ;
- la figure 8 est une vue semblable à la figure 2 montrant une variante de réalisation.

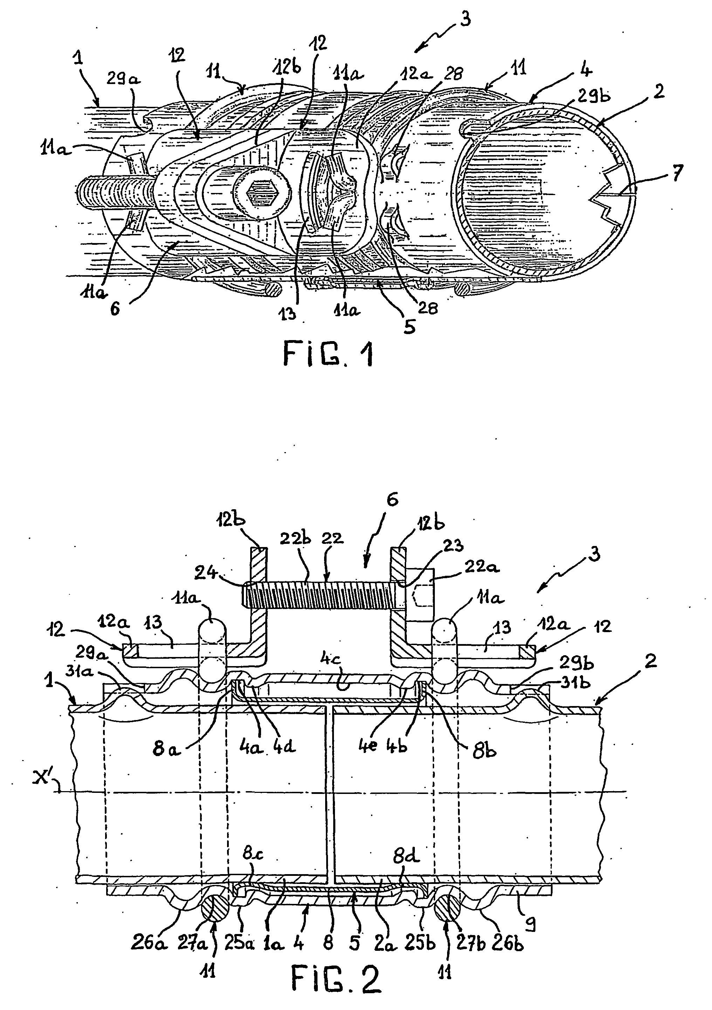

En se reportant aux figures 1 et 2 on peut voir deux tubes 1 et 2 accouplés l'un à l'autre de manière étanche par un dispositif d'accouplement 3 selon l'invention. Le dispositif d'accouplement 3 se compose essentiellement d'un manchon 4 fendu longitudinalement, d'une garniture d'étanchéité 5 et de moyens de serrage 6. La fente du manchon 4 est visible en 7 dans la figure 1, mais n'a pas été représentée dans la figure 2. Le dispositif d'accouplement 3 est représenté à l'état serré dans la figure 1 et dans la moitié inférieure de la figure 2, tandis qu'il est représenté à l'état desserré dans la moitié supérieure de la figure 2.

Comme cela est mieux visible dans la figure 2, la garniture d'étanchéité 5 est constituée par une pièce métallique de révolution 8 à paroi mince, qui entoure les parties d'extrémités 1a et 2a des deux tubes 1 et 2. A chacune de ses extrémités, la pièce de révolution 8 comporte un collet 8a ou 8b rabattu vers l'extérieur. Les deux collets 8a et 8b sont respectivement engagés dans des gorges 4a et 4b formées dans la surface périphérique intérieure du manchon fendu 4.

De préférence, les collets 8a et 8b ont une dimension radiale sensiblement égale à cinq fois l'épaisseur de la paroi de la pièce de révolution 8 et les gorges 4a et 4b ont une profondeur sensiblement égale au 3/5 de la dimension radiale des collets 8a et 8b et une largeur sensiblement égale à trois fois l'épaisseur de la paroi de la pièce de révolution 8. Par exemple, la pièce de révolution 8 peut être en acier doux revêtu d'aluminium ou en axier inoxydable et elle a une épaisseur de paroi d'environ 0,5mm. Dans ces conditions, les collets 8a et 8b peuvent avoir une dimension radiale d'environ 2,5mm et les gorges 4a et 4b peuvent avoir une profondeur d'environ 1,5mm et une largeur d'environ 1,5mm.

Entre les deux gorges 4a et 4b, le manchon fendu 4 présente, dans sa surface périphérique intérieure, une gorge ou renfoncement 4c ayant une largeur nettement plus grande que celle des deux gorges 4a et 4b. Il est ainsi formé deux renflements intérieurs 4d et 4e respectivement entre les gorges 4a et 4c et entre les gorges 4c et 4b. De préférence, les deux renflements intérieurs 4d et 4e ont une surface périphérique intérieure qui est décalée radialement vers l'extérieur par rapport à la surface périphérique intérieure du manchon 4 dans ses régions situées au- delà des deux gorges 4a et 4b vers les extrémités dudit manchon. Par exemple, ledit décalage radial peut être d'environ 0,6mm.

Le manchon fendu 4 peut être par exemple réalisé à partir d'une bande 9 en acier doux revêtu d'aluminium ou en axier inoxydable, ayant une épaisseur de 1,2mm. Dans ces conditions, les gorges 4a, 4b et 4c peuvent être avantageusement réalisées de manière simple par une opération de roulage ou de laminage de ladite bande d'acier 9.

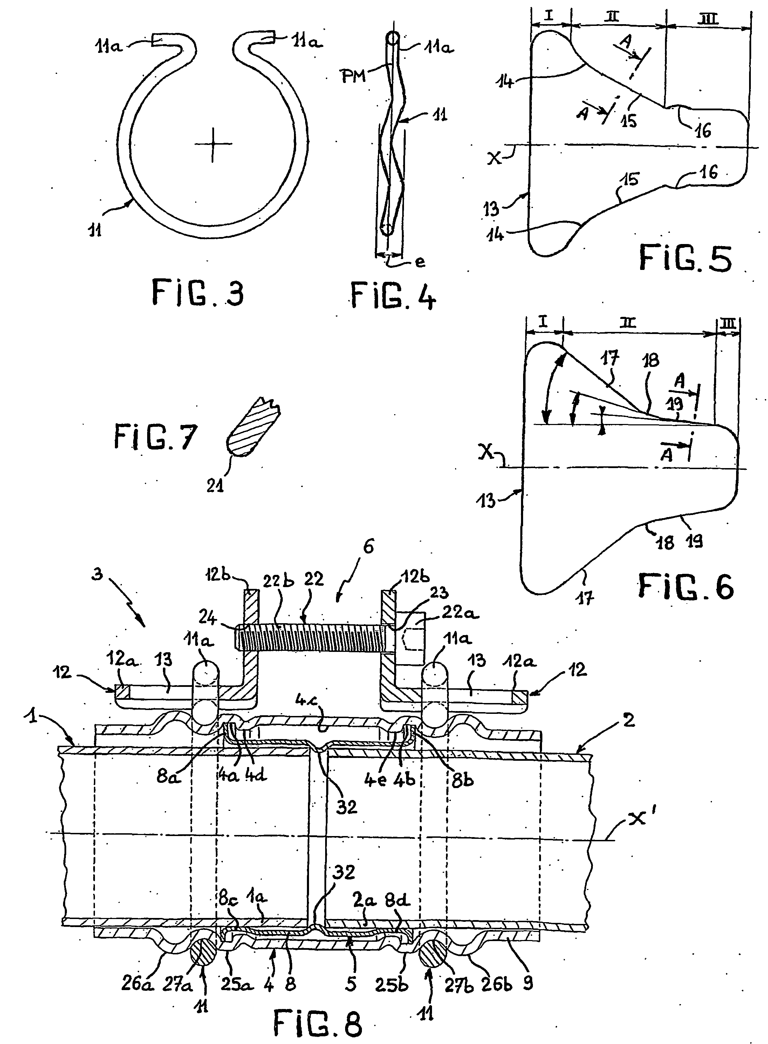

Dans le mode de réalisation du dispositif d'accouplement représenté sur les figures 1 et 2, les moyens de serrage 6 se composent essentiellement de deux anneaux ouverts à ressort 11 et de deux cames 12 respectivement associés aux anneaux à ressort 11. Chaque anneau à ressort 11 entoure le manchon fendu 4 dans une région de celui- ci située à proximité de la gorge 4a ou 4b comme montré dans la figure 2. Chaque anneau à ressort 11 comporte deux extrémités 11a en forme de crochet comme montré dans la figure 3. Chaque anneau à ressort 11 est de préférence réalisé à partir d'un fil d'acier demi- dur, revêtu d'aluminium, ayant par exemple un diamètre de 3mm. De préférence, chaque anneau à ressort 11 est conformé de manière à présenter un profil ondulé par rapport à un plan moyen PM dudit anneau à ressort, comme montré dans la figure 4. L'amplitude crête à crête e des ondulations du profil ondulé peut être par exemple égale à environ 2 fois le diamètre du fil d'acier formant l'anneau à ressort 11. Ce profil ondulé est destiné à permettre un léger allongement élastique de l'anneau à ressort 11 dans le sens circonférentiel lorsqu'il est serré autour du manchon fendu 4.

Chaque came 12 comporte une lumière 13 dans laquelle sont engagées les extrémités en forme de crochet 11a de l'anneau à ressort 11 associé à la came. Comme montré dans la figure 5, la lumière 13 a une partie large I se raccordant par une partie II de largeur décroissante à une partie étroite III. Ainsi, un déplacement relatif de la came 12 par rapport aux extrémités en forme de crochet 11a de l'anneau à ressort 11 depuis la partie large I jusqu'à la partie étroite III de la lumière 13 provoque un rapprochement mutuel des deux extrémités 11a de l'anneau à ressort 11 et, par suite, un resserrement de ce dernier autour du manchon fendu 4. La lumière 13 a une forme symétrique par rapport à son axe longitudinal X.

Dans la forme de réalisation de la lumière représentée sur la figure 5, les deux bords longitudinaux de la partie II de la lumière 13 comportent successivement, de la partie I vers la partie III de la lumière 13, une première partie courbe 14, dont la convexité est orientée vers l'axe X, suivie d'une seconde partie 15 rectiligne. Une telle forme de la lumière 13 permet, lorsque la came 12 est déplacée de droite à gauche dans la direction de l'axe X par rapport aux extrémités 11a de l'anneau 11 supposé fixe, d'obtenir tout d'abord un rapprochement relativement rapide des deux extrémités 11a de l'anneau 11 au début du déplacement de la came lorsque l'effort de serrage à exercer est relativement faible (rattrapage d'un éventuel jeu radial entre l'anneau 11 et le manchon 4), puis d'obtenir un rapprochement plus lent des extrémités 11a de l'anneau 11 quand les efforts radiaux de serrage à exercer sur le manchon 4 pour le comprimer radialement deviennent plus importants. Dans les bords longitudinaux de la partie III de la lumière 13 sont de préférence formés deux évidements 16 peu profonds, qui se font mutuellement face et qui ont un profil en arc de cercle dont le rayon correspond au rayon du fil d'acier formant l'anneau 11. Ainsi, en fin de serrage, le fil d'acier de l'anneau 11 vient s'encliqueter dans les deux évidements 16 de la partie III de la lumière 13.

Dans la variante de réalisation représentée sur la figure 6, la partie II de la lumière 13 a une longueur plus grande que la partie correspondante de la lumière 13 de la figure 5, et chacun de ses deux bords longitudinaux comporte une succession de segments, par exemple trois segments 17, 18 et 19 qui font respectivement des angles ₁, ₂ et ₃, de valeurs décroissantes, avec l'axe longitudinal X de la lumière 13. A titre d'exemple, ₁ peut être égal à environ 41°, ₂ à environ 22° et ₃ à environ 11°.

Dans les deux modes de réalisation des figures 5 et 6, les bords longitudinaux de la lumière 13 ont de préférence un contour arrondi, comme montré en 21 dans la figure 7, afin de ne pas blesser le fil d'acier constituant l'anneau 11 lors du déplacement de la came 12 par rapport à l'anneau 11.

En se reportant à nouveau aux figures 1 et 2, on peut voir que chaque came 12 a une forme générale en L, avec une première branche 12a qui s'étend parallèlement à l'axe longitudinal X' du manchon 4, et une seconde branche 12b qui s'étend perpendiculairement audit axe X'. La lumière 13 de chaque came 12 est formée dans la première branche 12a.

Dans ce cas, les moyens de serrage 6 comprennent en outre un dispositif de serrage à vis apte à coopérer avec les branches 12a des cames 12 pour provoquer simultanément un déplacement relatif des deux cames 12 par rapport aux anneaux 11. Dans ce cas, les deux branches 12a des cames 12 s'étendent dans des directions opposées et la partie étroite III de la lumière 13 de chaque came se trouve près de l'extrémité libre de la branche 12a de la came 12 correspondante. Le dispositif de serrage à vis peut être constitué par une unique vis 22 dont la tête 22a prend appui sur la branche 12b d'une des deux cames 12 et dont la tige filetée 22b passe librement à travers un trou lisse 23 dans la branche 12b de ladite came 12 et est vissée dans un trou taraudé 24 dans la branche 12b de l'autre came 12. Dans une variante de réalisation, le trou 24 peut être un trou lisse et un écrou (non-montré) peut être vissé sur l'extrémité libre de la tige filetée 22b de la vis 22, de façon à déplacer l'une vers l'autre les branches 12b des deux cames 12 lorsque l'ensemble vis-écrou est serré.

De préférence, le manchon 4 comporte des moyens de positionnement pour définir la position axiale des anneaux 11 dans les régions du manchon 4 situé à proximité des deux gorges 4a et 4b. Dans le cas où les gorges 4a, 4b et 4c du manchon 4 sont formées par une opération de roulage ou de laminage d'une bande d'acier 9, lesdits moyens de positionnement peuvent être avantageusement formés par déformation localisée, vers l'extérieur, de la paroi du manchon 4 lors de ladite opération de roulage ou de laminage. Etant donné qu'à chacune des deux gorges 4a et 4b correspond déjà un renflement extérieur 25a ou 25b, respectivement, sur la surface périphérique extérieure du manchon 4, il suffit de former deux renflements 26a et 26b sur la surface périphérique extérieure du manchon 4, respectivement à proximité des deux renflements 25a et 25b, de manière à définir deux gorges 27a et 27b aptes à recevoir et positionner les deux anneaux 11, respectivement, comme montré dans la figure 2.

A titre de variante, les renflements 26a et 26b peuvent être remplacés par plusieurs protubérances obtenues par découpage et emboutissage de la bande d'acier 9 constituant le manchon 4, comme montré en 28 dans la figure 1, ou encore par des languettes (non-montrées) obtenues par découpage de la bande d'acier 9 et repliées à angle droit de façon à s'étendre radialement par rapport au manchon 4.

De préférence, le manchon 4 comporte deux encoche s 29a et 29b dans ses extrémités, comme montré dans les figures 1 et 2. Les encoches 29a et 29b sont destinées à recevoir des protubérances 31 a et 31b qui font saillie respectivement sur la périphérie des parties d'extrémités 1a et 2a des deux tubes 1 et 2. Les encoches 29a et 29b et les protubérances 31a et 31b définissent à la fois des moyens de positionnement angulaire et des moyens de positionnement axial du manchon 4 par rapport aux tubes 1 et 2. Ainsi, lorsque, en service, les parties d'extrémités 1a et 2a des deux tubes 1 et 2 sont engagées dans le manchon 4 et dans la pièce de révolution 8 constituant la garniture d'étanchéité 5 et que les deux protubérances 31a et 31b sont engagées dans les encoches 29a et 29b du manchon 4, on est assuré que les extrémités mutuellement en vis à vis des deux tubes 1 et 2 se trouveront exactement dans la région médiane du manchon 4 et de la pièce de révolution 8, entre les deux gorges 4a et 4b.

Les deux protubérances 31a et 31b peuvent être par exemple formées par emboutissage de la paroi des tubes 1 et 2 comme montré dans la figure 2.

A titre de variante (non-montrée), les deux protubérances peuvent être constituées par des pions soudés respectivement sur les deux tubes 1 et 2.

Selon une autre variante montrée dans la figure 8, le manchon 4 ne comporte pas d'encoche à ses extrémités et les tubes 1 et 2 sont dépourvus de protubérance. Dans ce cas, le positionnement axial du manchon 4 et de la pièce de révolution 8 par rapport aux deux tubes 1 et 2 est obtenu de la manière suivante. Dans sa région médiane, la pièce de révolution 8 comporte au moins une protubérance 32 qui fait radialement saillie vers l'intérieur sur la surface périphérique intérieure de la pièce de révolution 8 et qui définit une butée axiale pour les deux tubes 1 et 2. La protubérance 32 peut être unique et s'étendre sur la totalité de la circonférence de la pièce de révolution 8. A titre de variante, il peut être prévu plusieurs protubérances 32 formées par emboutissage dans la paroi mince de la pièce de révolution 8 en des points régulièrement espacés le long de la circonférence de celle-ci, par exemple deux protubérances diamétralement opposées ou trois protubérances espacées de 120°.

L'accouplement étanche des tubes 1 et 2 à l'aide du dispositif d'accouplement 3 décrit ci-dessus s'effectue de la manière suivante. Alors que le dispositif d'accouplement 3 est dans l'état desserré montré dans la moitié supérieure de la figure 2, dans lequel les deux cames 12 sont écartées l'une de l'autre et les extrémités 11a des deux anneaux à ressort 11 se trouvent dans la partie large I de la lumière 13 des cames 12, on engage tout d'abord les parties d'extrémités 1a et 2a des tubes 1 et 2 respectivement dans les extrémités du manchon 4, jusqu'à ce que les protubérances 31a et 31b viennent buter contre le fond des encoches 29a et 29b (figure 2), ou jusqu'à ce que les extrémités des tubes 1 et 2 viennent en butée contre la ou les protubérances 32 de la pièce de révolution 8. Ensuite, la vis 22 est tournée au moyen d'une clef appropriée dans le sens du vissage, ce qui a pour effet de rapprocher les deux cames 12 l'une de l'autre, donc de rapprocher les deux extrémités 11a de chacun des deux anneaux 11 à ressort 11 l'une de l'autre. Il en résulte que les deux anneaux 11 compriment radialement le manchon fendu 4 dont la fente 7 devient de plus en plus étroite. Au cours du serrage du manchon 4 par les moyens de serrage 6, le fond des gorges 4a et 4b du manchon 4 agit sur la périphérie des collets 8a, 8b, respectivement, sur toute leur circonférence, et provoque un rétreint des zones d'extrémités 8c et 8d de la pièce de révolution 8, amenant ainsi lesdites zones d'extrémités 8c et 8d en contact étanche avec la surface périphérique extérieure des parties d'extrémités 1a et 2a des tubes 1 et 2, sur toute leur circonférence. A la fin du serrage, le dispositif d'accouplement est dans l'état représenté dans la moitié inférieure de la figure 2 (ou dans la moitié inférieure de la figure 8).

Les expériences réalisées par le demandeur ont montré que, avec le mode de réalisation du dispositif d'accouplement décrit plus haut, il est possible d'obtenir un rétreint relativement important des zones d'extrémités 8c et 8d de la pièce de révolution 8. La réduction de diamètre de la pièce de révolution 8 dans les zones d'extrémités 8c et 8d peut atteindre environ 3mm. Le rétreint de ces zones d'extrémités 8c et 8d est facilité par le fait que la partie médiane de la pièce de révolution 8 peut s'expanser radialement vers l'extérieur dans la gorge ou renfoncement 4c du manchon 4. En outre, les expériences réalisées par le demandeur ont montré que la portée d'appui de chacune des deux zones d'extrémités 8c et 8d sur le tube 1 ou 2 a une largeur d'environ 3mm et est parfaitement lisse, assurant ainsi une bonne étanchéité entre les deux tubes 1 et 2 et la pièce de révolution 8.

La vis 22 peut être supprimée et que chacune des deux cames 12 peut être constituée par un levier pivotant apte à agir sur les deux extrémités 11a de l'anneau à ressort 11 correspondant pour rapprocher les deux extrémités 11a l'une de l'autre lorsqu'on fait pivoter le levier d'un angle d'environ 180° autour d'un axe orthogonal à l'axe X du manchon fendu 4. Par exemp le, chaque levier peut être constitué par une plaque d'acier, de forme allongée, dans l'une des extrémités de laquelle est découpée une languette qui a une forme semblable à celle de la lumière 13 de la figure 5 ou de la figure 6 et qui reste attachée à ladite plaque par l'extrémité de la partie étroite de la languette. A son extrémité attachée à la plaque, la languette est pliée autour d'une ligne de pliage s'étendant perpendiculairement à l'axe longitudinal de la plaque, de façon à s'étendre obliquement v ers l'extérieur par rapport à la plaque et de façon à dégager une lumière semblable à la lumière 13 de la figure 5 ou 6. La partie de la plaque formant les deux côtés longitudinaux de la lumière est recourbée vers l'extrémité libre de la languette de manière à former avec cette dernière un oeillet pour le montage pivotant du levier sur les extrémités 11a de l'anneau à ressort 11 correspondant.

## Revendications

1. Dispositif pour l'accouplement étanche de deux tubes rigides lisses (1, 2) de même diamètre disposés selon le même axe (X') en regard l'un de l'autre, comportant une garniture d'étanchéité (5) entourant une partie d'extrémité (1a, 2a) de chacun de deux tubes placés en regard, un manchon (4) fendu longitudinalement entourant la garniture d'étanchéité (5), et des moyens de serrage (6) pour serrer radialement ledit manchon (4) autour de la garniture d'étanchéité (5) et presser radialement ladite garniture d'étanchéité (5) contre la périphérie des parties d'extrémité des deux tubes (1, 2), **caractérisé en ce que** la garniture d'étanchéité (5) est constituée par une pièce métallique de révolution (8) à paroi mince, ayant la forme générale d'un cylindre avec deux collets (8a, 8b) rabattus vers l'extérieur à ses extrémités, et **en ce que** le manchon fendu (4) est conformé de manière que sa surface périphérique intérieure présente deux gorges (4a, 4b) qui sont aptes à recevoir respectivement les deux collets (8a, 8b) de ladite pièce de révolution (8) et qui ont une profondeur plus faible que la dimension radiale desdits collets, de telle sorte que le fond des gorges (4a, 4b) soit apte à agir sur la périphérie des collets, respectivement, sur toute leur circonférence, pour provoquer un rétreint des zones d'extrémité (8c, 8d) de ladite pièce de révolution (8) et amener lesdites zones d'extrémité en contact étanche avec la surface périphérique extérieure des parties d'extrémité (1a, 2a) des deux tubes, sur toute leur circonférence, lors du serrage du manchon fendu (4) par les moyens de serrage (6) autour de ladite pièce de révolution (8).

2. Dispositif selon la revendication 1, **caractérisé en ce que** lesdits collets (8a, 8b) ont une dimension radiale sensiblement égale à cinq fois l'épaisseur de la paroi de ladite pièce de révolution (8), et **en ce que** lesdites gorges (4a, 4b) ont une profondeur sensiblement égale au 3/5 de la dimension radiale des collets et une largeur sensiblement égale à trois fois l'épaisseur de la paroi de ladite pièce de révolution.

3. Dispositif selon la revendication 1 ou 2, **caractérisé en ce que** ladite pièce de révolution (8) est en acier doux revêtu d'aluminium ou en acier inoxydable.

4. Dispositif selon l'une quelconque des revendications 1 à 3, **caractérisé en ce que** ladite pièce de révolution (8) a une épaisseur de paroi d'environ 0,5mm, les collets (8a, 8b) ont une dimension radiale d'environ 2,5mm et les gorges ont une profondeur d'environ 1,5mm.

5. Dispositif selon l'une quelconque des revendications 1 à 4, **caractérisé en ce que** le manchon fendu (4) est conformé de manière que sa surface périphérique intérieure présente, entre les deux gorges (4a, 4b), une gorge supplémentaire (4c), de plus grande largeur que les deux gorges, avec formation d'un renflement intérieur (4d, 4e) entre chacune des deux gorges et la gorge supplémentaire, ledit renflement intérieur ayant une surface périphérique intérieure qui est décalée radialement vers l'extérieur par rapport à la surface périphérique intérieure du manchon (4) dans ses régions situées au- delà des deux gorges (4a, 4b) vers les extrémités dudit manchon.

6. Dispositif selon l'une quelconque des revendications 1 à 5, **caractérisé en ce que** les gorges (4a, 4b, 4c) du manchon fendu sont formées par une opération de roulage ou laminage d'une bande (9) en acier doux revêtu d'aluminium ou en acier inoxydable.

7. Dispositif selon l'une quelconque des revendications 1 à 6, **caractérisé en ce que** les moyens de serrage (6) comprennent deux anneaux ouverts à ressort (11), qui entourent le manchon fendu (4) dans des régions de celui-ci situées respectivement à proximité des deux gorges (4a, 4b), et deux cames (12) qui sont associées respectivement aux deux anneaux à ressort (11) et qui sont aptes à agir sur des extrémités en forme de crochet (11a) des deux anneaux à ressort pour resserrer lesdits anneaux à ressort autour dudit manchon fendu et comprimer radialement celui- ci.

8. Dispositif selon la revendication 7, **caractérisé en ce que** chaque anneau à ressort (11) a un profil ondulé par rapport à un plan moyen (PM) dudit anneau à ressort.

9. Dispositif selon la revendicati on 7 ou 8, **caractérisé en ce que** chaque came (12) comporte une lumière (13) dans laquelle sont engagées les extrémités (11a) en forme de crochet de l'anneau à ressort (11) associé à la came, ladite lumière ayant une partie large (I) se raccordant par une partie (II) de largeur décroissante à une partie étroite (III), de telle manière qu'un déplacement relatif de la came (12) par rapport aux extrémités (11a) en forme de crochet de l'anneau à ressort (11) associé depuis la partie large (I) jusqu'à la partie étroite (III) de la lumière (13) provoque un resserrement dudit anneau à ressort (11).

10. Dispositif selon la revendication 9, **caractérisé en ce que** chaque came (12) a une forme générale en L, dont une première branche (12a) s'étend parallèlement à l'axe longitudinal (X') du manchon fendu (4) et une seconde branche (12b) s'étend perpendiculairement audit axe longitudinal, ladite lumière (13) étant formée dans la première branche (12a), et **en ce que** les moyens de serrage (6) comprennent en outre un dispositif de serrage à vis (22) apte à coopérer avec les secondes branches (12b) des deux cames (12) pour provoquer simultanément ledit déplacement relatif des deux cames.

11. Dispositif selon la revendication 10, **caractérisé en ce que** les premières branches (12a) des deux cames (12) s'étendent dans des directions opposées, **en ce que** la partie étroite (III) de la lumière (13) de chaque came (12) se trouve près de l'extrémité libre de la première branche (12a) de la came correspondante, et **en ce que** le dispositif de serrage à vis (22) est constitué par une vis (22) dont la tête (22a) prend appui sur la seconde branche (12b) d'une première des deux cames (12) et dont la tige filetée (22b) passe librement à travers un trou lisse (23) dans la seconde branche (12b) de la première came et est vissée dans un trou taraudé (24) dans la seconde branche (12b) de la seconde came.

12. Dispositif selon la revendication 10 ou 11, **caractérisé en ce que** le manchon fendu (4) comporte des moyens de positionnement (25a - 27a ; 25b - 27b) pour définir la position axiale des anneaux à ressort (11) dans lesdites régions du manchon fendu (4) situées à proximité des deux gorges (4a, 4b).

13. Dispositif selon les revendications 6 et 12, **caractérisé en ce que** lesdits moyens de positionnement (25a - 27a ; 25b - 27b) sont formés par déformation localisée, vers l'extérieur, de la paroi du manchon fendu (4) lors de ladite opération de roulage ou laminage de ladite bande (9) d'acier doux.

14. Dispositif selon l'une quelconque des revendicat ions 1 à 13, **caractérisé en ce que** deux encoches (29a, 29b) sont formées respectivement dans les extrémités du manchon fendu (4) et sont aptes à recevoir des protubérances (31a, 31b) qui font saillie respectivement sur la périphérie des parties d'extrémité (1a, 2a) des deux tubes (1, 2) à accoupler, de façon à définir à la fois des moyens de positionnement angulaire et des moyens de positionnement axial du manchon fendu (4) par rapport aux deux tubes (1, 2), tels que, en service, les extrémités mutuellement en vis à vis des deux tubes se trouvent dans la région médiane du manchon fendu entre les deux gorges (4a, 4b) de celui- ci.

15. Dispositif selon l'une quelconque des revendications 1 à 13, **caractérisé en ce que**, dans sa région médiane, ladite pièce de révolution (8) comporte au moins une protubérance (32) qui fait radialement saillie vers l'intérieur sur la surface périphérique intérieure de la pièce de révolution et qui définit une butée axiale pour les deux tubes (1, 2) à accoupler.

## Claims

1. Device for the leakproof coupling of two smooth, rigid tubes (1, 2) of the same diameter lying along the same axis (X') opposite one another, which comprises a sealing element (5) that surround an end portion (1a, 2a) of each of two tubes positioned opposite one another, a sleeve (4) split longitudinally that surround the said sealing element (5), and tightening means (6) for tightening the said sleeve (4) radially around the sealing element (5) and for pressing the said sealing element (5) radially against the periphery of the end portions of the two tubes (1, 2), **characterised in that** the sealing element (5) consists of a thin-walled, rotationally symmetric metallic fitting (8) having the general shape of a cylinder with two collars (8a, 8b) bent outwards at it ends, and the split sleeve (4) is shaped so that its inner peripheral surface has two grooves (4a, 4b) that can receive, respectively, the two collars (8a, 8b) of the said rotationally symmetric fitting (8), the depth of the grooves being smaller than the radial height of the two collars so that the bottom of the grooves (4a, 4b) can act upon the periphery of the collars, in each case all round their circumference, to constrict the end zones (8c, 8d) of the said rotationally symmetric fitting (8) and bring the said end zones into leakproof contact with the outer peripheral surface of the end portions (1a, 2a) of the two tubes all around their circumference during the tightening of the split sleeve (4) by the tightening means (6) around the said rotationally symmetric fitting (8).

2. Device according to Claim 1, **characterised in that** the radial height of the said collars (8a, 8b) is essentially five times the wall thickness of the said rotationally symmetric fitting (8) and the depth of the said grooves is essentially equal to 3/5 of the radial height of the collars and their width is essentially equal to three times the wall thickness of the said rotationally symmetric fitting.

3. Device according to Claims 1 or 2, **characterised in that** the said rotationally symmetric fitting (8) is made of mild steel clad with aluminium or stainless steel.

4. Device according to and of Claims 1 to 3, **characterised in that** the wall thickness of the said rotationally symmetric fitting (8) is approximately 0.5 mm, the radial height of the collars (8a, 8b) is approximately 2.5 mm and the depth of the grooves is approximately 1.5 mm.

5. Device according to any of Claims 1 to 4, **characterised in that** the split sleeve (4) is shaped so that its inner peripheral surface has, between the two grooves (4a, 4b), an additional groove (4c) wider than the other two grooves, with an inner bulge (4d, 4e) between each of the tow grooves and the said additional groove, the said inner bulge having a peripheral surface which is offset radially outwards relative to the inner peripheral surface of the sleeve (4) in its areas beyond the two grooves (4a, 4b) towards the ends of the said sleeve.

6. Device according to any of Claims 1 to 5, **characterised in that** the grooves (4a, 4b, 4c) of the split sleeve are formed by a rolling or laminating operation on a strip (9) of mild steel clad with aluminium or stainless steel.

7. Device according to any of Claims 1 to 6, **characterised in that** the tightening means (6) comprise two open spring-rings (11), which surround the split sleeve (4) in areas thereof located respectively close to the two grooves (4a, 4b), and two cams (12) respectively associated with the two spring-rings (11) and which can act upon hook-shaped ends (11 a) of the two spring-rings to tighten the said spring-rings around the said split sleeve and compress the latter radially.

8. Device according to Claim 7, **characterised in that** each spring-ring (11) has a profile that undulates relative to a mean plane (PM) of the spring-ring.

9. Device according to Claims 7 or 8, **characterised in that** each cam (12) comprises an opening (13) in which the hook-shaped ends (11a) of the spring-ring (11) associated with the cam are engaged, the said opening having a wide part (I) joined by a section (II) of diminishing width to a narrow part (III), such that a movement of the cam (12) relative to the hook-shaped ends (11a) of the associated spring-ring from the wide part (I) to the narrow part (III) of the opening (13) causes the spring-ring (11) to tighten.

10. Device according to Claim 9, **characterised in that** each cam (12) has the general shape of an L, a first branch (12a) of which extends parallel to the longitudinal axis (X') of the split sleeve (4) while a second branch (12b) extends perpendicularly to the said longitudinal axis, the said opening (13) being formed in the first branch (12a), and the tightening means (6) also comprise a screw tightening element (22) which co-operates with the second branches (12b) of the two cams (12) to produce a simultaneous relative movement of the two cams.

11. Device according to Claim 10, **characterised in that** the first branches (12a) of the two cams (12) extend in opposite directions, the narrow part (III) of the opening (13) in each cam (12) is near the free end of the first branch (12a) of the corresponding cam, and the screw tightening element (22) consists of a bolt (22) whose head (22a) is in contact with the second branch (12b) of a first of the two cams (12) while its threaded shank (22b) passes freely though a smooth hole (23) in the second branch (12b) and is screwed into a threaded hole (24) in the second branch (12b) of the second cam.

12. Device according to Claims 10 or 11, **characterised in that** the split sleeve (4) comprises positioning means (25a - 27a; 25b - 27b) for defining the axial position of the spring-rings (11) in the said areas of the split sleeve (4) located near the two grooves (4a, 4b).

13. Device according to Claims 6 and 12, **characterised in that** the said positioning means (25a - 27a; 25b - 27b) are formed by the local, outward deformation of the wall of the split sleeve (4) during the said rolling or lamination operation of the said mild steel strip (9).

14. Device according to any of Claims 1 to 13, **characterised in that** two notches (29a, 29b) are formed respectively in the ends of the split sleeve (4) and can receive protuberances (31a, 31b) which project respectively on the periphery of the end portions (1a, 2a) of the two tubes (1, 2) to be coupled, so as to define both angular and axial positioning means of the split sleeve (4) relative to the two tubes (1, 2), such that in service, the mutually opposed ends of the two tubes are in the median area of the split sleeve and between the two grooves (4a, 4b) of the latter.

15. Device according to any of Claims 1 to 13, **characterised in that** in its median area the said rotationally symmetric fitting has at least one protuberance (32) which projects radially inwards on the inner peripheral surface of the rotationally symmetric fitting and which defines an axial abutment for the two tubes (1, 2) to be coupled.

## Patentansprüche

1. Vorrichtung für das dichte Kuppeln von zwei starren, glatten Rohren (1, 2) mit gleichem Durchmesser, die entlang der selben Achse (X') zueinander angeordnet sind, mit einer Dichtung (5), die einen Bereich am Ende (1a, 2a) jedes der beiden einander gegenüberliegenden Rohre umgibt, einer in Längsrichtung geschlitzten Hülse (4), die die Dichtung (5) umgibt, und Festspannmitteln (6), um die Hülse (4) um die Dichtung (5) herum radial festzuspannen und die Dichtung (5) radial gegen den Umfang der Bereiche am Ende der beiden Rohre (1, 2) zu pressen, **dadurch gekennzeichnet, dass** die Dichtung (5) gebildet ist von einem dünnwandigen Rotationsteil aus Metall (8) mit der allgemeinen Form eines Zylinders mit zwei Krägen (8a, 8b), die an dessen Enden nach außen umgebogen sind, und dass die geschlitzte Hülse (4) derart ausgebildet ist, dass ihre Innenumfangsfläche zwei Nuten (4a, 4b) aufweist, die jeweils einen der beiden Krägen (8a, 8b) des Rotationsteils (8) aufnehmen können und deren Tiefe geringer ist als die radiale Abmessung der Krägen derart, dass der Boden der Nuten (4a, b) auf den Umfang des jeweiligen Kragens über dessen gesamten Kreisumfang, einwirken kann um zu bewirken, dass sich die Endbereiche (8c, 8d) des Rotationsteils (8) verengen, und um diese Endbereiche mit der Außenumfangsfläche der Bereiche an den Enden (1a, 2a) der beiden Rohre über ihren gesamten Kreisumfang in dichten Kontakt zu bringen, wenn die geschlitzte Hülse (4) mittels der Festspannmittel (5) um das Rotationsteil (8) herum festgespannt wird.

2. Vorrichtung nach Anspruch 1, **dadurch gekennzeichnet, dass** die Krägen (8a, 8b) in radialer Richtung eine Abmessung haben, die im wesentlichen das Fünffache der Wanddicke des Rotationsteils (8) beträgt und dass die Tiefe der Nuten (4a, 4b) im wesentlichen 3/5 der radialen Abmessung der Krägen und ihre Breite im wesentlichen das Dreifache der Wanddicke des Rotationsteils beträgt.

3. Vorrichtung nach Anspruch 1 oder 2, **dadurch gekennzeichnet, dass** das Rotationsteil (8) aus aluminiumbeschichtetem weichem Stahl oder aus rostfreiem Stahl besteht.

4. Vorrichtung nach einem der Ansprüche 1 bis 3, **dadurch gekennzeichnet, dass** die Wanddicke des Rotationsteils (8) in etwa 0,5 mm, die radiale Abmessung der Krägen (8a, 8b) in etwa 2.5 mm und die Tiefe der Nuten in etwa 1,5 mm beträgt.

5. Vorrichtung nach einem der Ansprüche 1 bis 4, **dadurch gekennzeichnet, dass** die geschlitzte Hülse (4) derart ausgebildet ist, dass ihre Innenumfangsfläche zwischen den beiden Nuten (4a, 4b) eine zusätzliche Nut (4c) aufweist, die breiter ist als die beiden Nuten, wobei zwischen jeder der beiden Nuten und der zusätzlichen Nut eine innere Einschnürung (4d, 4e) ausgebildet ist, wobei diese Einschnürung eine Innenumfangsfläche aufweist, die relativ zu der Innenumfangsfläche der Hülse (4) in deren Bereichen, die jenseits der beiden Nuten (4a, 4b) in Richtung zu den Enden der Hülse liegen, radial nach außen versetzt ist.

6. Vorrichtung nach einem der Ansprüche 1 bis 5, **dadurch gekennzeichnet, dass** die Nuten (4a, 4b, 4c) der geschlitzten Hülse durch Bearbeitung eines Streifens (9) aus aluminiumbeschichtetem weichem Stahl oder aus rostfreiem Stahl durch Rollformen oder Walzen geformt sind.

7. Vorrichtung nach einem der Ansprüche 1 bis 6, **dadurch gekennzeichnet, dass** die Festspannmittel (6) zwei offene Federringe (11), aufweisen, die die geschlitzte Hülse (4) in den Bereichen umgeben, die sich jeweils in der Nähe der beiden Nuten (4a, 4b) befinden, sowie zwei Nocken (12), die jeweils mit den beiden Federringen (11) verbunden sind und auf die hakenförmig ausgebildeten Enden (11a) der beiden Federringe einwirken können, um die Federringe um die geschlitzte Hülse herum festzuspannen und diese in radialer Richtung zusammenzudrücken.

8. Vorrichtung nach Anspruch 7, **dadurch gekennzeichnet, dass** jeder Federring (11) ein relativ zu einer Mittelebene (PM) des Federrings gewelltes Profils hat.

9. Vorrichtung nach Anspruch 7 oder 8, **dadurch gekennzeichnet, dass** jede Nocke (12) einen Schlitz (13) aufweist, in den die hakenförmigen Enden (11a) des mit der Nocke verbundenen Federrings (11) eingreifen, wobei der Schlitz einen breiten Teil (I) aufweist, der über einen Teil (II) mit abnehmender Breite an einen schmalen Teil (III) anschließt, derart, dass eine relative Bewegung der Nocke (12) relativ zu den hakenförmigen Enden (11a) des zugehörigen Federrings (11), ausgehend von dem breiten Teil (1) bis zu dem schmalen Teil (III) des Schlitzes (13), ein Zusammenziehen des Federrings (11) bewirkt.

10. Vorrichtung nach Anspruch 9. **dadurch gekennzeichnet, dass** jede Nocke (12) allgemein die Form eines L hat, von dem sich ein erster Schenkel (12a) parallel zu der Längsachse (X') der geschlitzten Hülse (4) und ein zweiter Schenkel (12b) senkrecht zu der Längsachse erstreckt, wobei der Schlitz (13) in dem ersten Schenkel (12a) ausgeformt ist, und dass die Festspannmittel (6) ferner eine Schraubspannvorrichtung (22) aufweisen, die mit den zweiten Schenkeln (12b) der beiden Nocken (12) zusammenwirken kann und so gleichzeitig die relative Bewegung der beiden Nocken bewirkt.

11. Vorrichtung nach Anspruch 10, **dadurch gekennzeichnet, dass** die ersten Schenkel (12a) der beiden Nocken (12) sich in entgegengesetzten Richtungen erstrecken, dass der enge Teil (III) des Schlitzes (13) jeder Nocke (12) sich nahe dem freien Ende des ersten Schenkels (12a) der entsprechenden Nocke befindet und dass die Schraubspannvorrichtung (22) gebildet ist von einer Schraube (22), deren Kopf (22a) sich an dem zweiten Schenkel (12b) einer ersten der beiden Nocken (12) abstützt und deren Gewindeschaft (22b) ein glattes Loch (23) in dem zweiten Schenkel (12b) der ersten Nocke frei durchsetzt und in ein Gewindeloch (24) in dem zweiten Schenkel (12b) der zweiten Nocke eingeschraubt ist.

12. Vorrichtung nach Anspruch 10 oder 11, **dadurch gekennzeichnet, dass** die geschlitzte Hülse (4) Positioniermittel (25a-27a, 25b-27b) aufweist, um die axiale Position der Federringe (11) in den Bereichen der geschlitzten Hülse (4) festzulegen, die sich nahe den beiden Nuten (4a, 4b) befinden.

13. Vorrichtung nach den Ansprüchen 6 und 12, **dadurch gekennzeichnet, dass** die Positioniermittel (25a-27a, 25b-27b) durch örtlich begrenzte Verformung der Wand der geschlitzten Hülse (4) nach außen im Zuge der Bearbeitung des Streifens (9) aus weichem Stahl durch Rollformen oder Walzen geformt sind.

14. Vorrichtung nach einem der Ansprüche 1 bis 13, **dadurch gekennzeichnet, dass** zwei Einkerbungen (29a, 29b) jeweils an den Enden der geschlitzten Hülse (4) ausgebildet sind und Ausstülpungen (31a, 31b) aufnehmen können, die jeweils über den Umfang der Bereiche an den Enden (1a, 2a) der beiden zu kuppelnden Rohre (1, 2) vorspringen, derart, dass sie gleichzeitig Mittel zur Winkelpositionierung und Mittel zur Axialpositionierung der geschlitzten Hülse (4) relativ zu den beiden Rohren (1, 2) bilden, derart, dass sich die gegenüberliegenden Enden der beiden Rohre im Betrieb im mittleren Bereich der geschlitzten Hülse zwischen deren beiden Nuten (4a, 4b) befinden.

15. Vorrichtung nach einem der Ansprüche 1 bis 13, **dadurch gekennzeichnet, dass** das Rotationsteil (8) in seinem mittleren Bereich mindestens eine Ausstülpung (32) aufweist, die in radialer Richtung über die Innenumfangsfläche des Rotationsteils nach innen vorspringt und einen axialen Anschlag für die beiden zu kuppelnden Rohre (1, 2) bildet.
